# EUROPEAN PATENT SPECIFICATION

(11) **EP 0 634 095 B1**
(45) Date of publication and mention of the grant of the patent: **10.06.1998**
(21) Application number: 94201998.5
(22) Date of filing: 11.07.1994
(51) Int. Cl.: A01J 7/00

(54) **A construction for automatically milking animals**
Vorrichtung zum automatischen Melken von Tieren
Dispositif de traite automatique d'animaux

(30) Priority: 12.07.1993 NL 9301213
(43) Date of publication of application: 18.01.1995
(73) Proprietor: MAASLAND N.V., 3155 PD Maasland (NL)
(72) Inventor: van der Lely, Cornelis, CH-6300 Zug (CH)
(74) Representative: Mulder, Herman

(56) References cited:
- EP-A- 0 313 109
- EP-A- 0 480 542
- EP-A- 0 532 066

## Description

The present invention relates to a construction for automatically milking animals, such as cows, comprising a milk box having a milking robot with at least one arm construction with a carrier of a teat cup and a second four-bar linkage with which the carrier can be moved in the upward direction.

Such a construction is known from EP-A-0 313 109. In order to position the teat cups in a horizontal plane, each teat cup can rotate around an associated vertical hinge pin. Consequently the teat cups can be positioned in the cycle.

So as to allow the carrier of a teat cup to be placed and moved under the animal in an advantageous manner, more in particular to enable transverse motions by means of the carrier, whereby coupling of the teat cups to the teats is advantageously influenced, the respective carrier of a teat cup is attached, according to the invention, to a first four-bar linkage, of which one arm is adjustable and which first four-bar linkage is active in a predominantly horizontal plane, while furthermore there is provided second four-bar linkage with which the carrier can be moved in the upward direction. More in particular, the carrier may be attached to a four-bar linkage near the box wall, as here there is sufficient room for accommodating such a structure. The construction can be provided near the box wall with adjusting devices comprising four-bar linkages, the devices being disposed such that the teat cups are simultaneously couplable to the four teats of an animal to be milked. Near the box wall there is sufficient room for accommodating four adjusting devices comprising four-bar linkages, whilst this creates the possibility of coupling the teat cups at the same time, so that coupling the teat cups can be effected in a particularly fast manner. The four-bar linkages are disposed such that two of these structures are located near each of the two side walls of the milk box. In an advantageous arrangement, the four-bar linkages accommodated near a side wall of the milk box may have been disposed at the exterior side, at the front and rear sides of the milk box. Since a four-bar linkage serves as a carrier of a teat cup and it must be possible to move this cup from the side wall of the box to under a relevant teat, such a four-bar linkage will preferably be active in a predominantly horizontal plane. In addition, the four-bar linkage can be connected capably of upward motion to a rigidly disposed frame portion. More in particular, via a second four-bar linkage the said first four-bar linkage can be connected in such a manner to a frame portion disposed near the box wall that it can be moved upwards. The control of the four-bar linkages can be effected with the aid of pneumatic operating cylinders. Precisely these cylinders, since they slightly yield when the legs of the animals kick against a four-bar linkage or against the carrier connected thereto, are of great importance. Each of the four-bar linkages is positioned such that the teat cup carrier connected thereto extends predominantly linearly and, from the side wall of the milk box, obliquely and rearwardly between a front and a hind leg of an animal to be milked to under a relevant teat of the animal. The teat cups in the construction are connected to milk tubes which are separately slidably accommodated in or along the predominantly linearly extending carriers of the teat cups. This enables, during milking, a flexible connection of the teat cups to the teats with respect to the carriers. In addition, an operating cylinder may be present for, when milking has ended, pulling a teat cup up against the end of a carrier. This operating cylinder can act on the milk tube as well as on a separate flexible element, such as a cable, by means of which the teat cup can be pulled against the end of a carrier.

Finally, it should be noted that one of the carriers may be provided with a detector, more specifically a laser detector, for determining the position of the teats of the animal to be milked. However, this detector may alternatively be placed in a fixed position near the box wall.

For a better understanding of the invention and to show how the same may be carried into effect, reference will now be made, by way of example, to an embodiment shown in the accompanying drawings, in which:
Figure 1 illustrates a construction for automatically milking animals, comprising three boxes;
Figure 2 is a plan view of the milk box forming part of the construction, and
Figure 3 is a side view of the milk box shown in Figure 2.

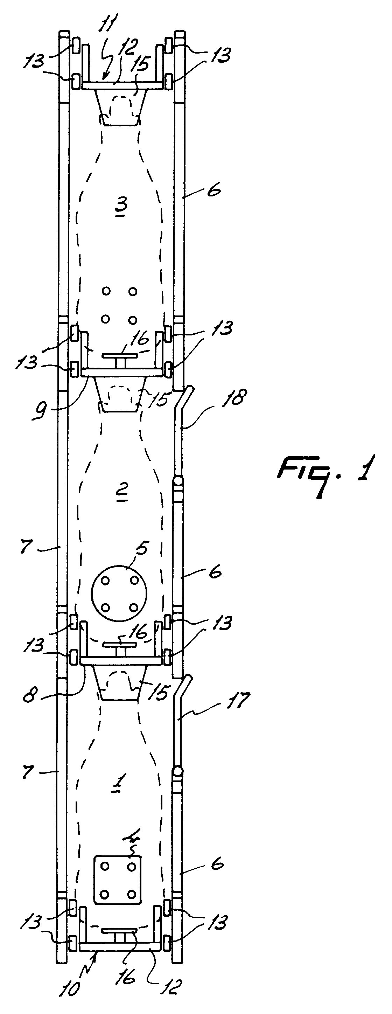

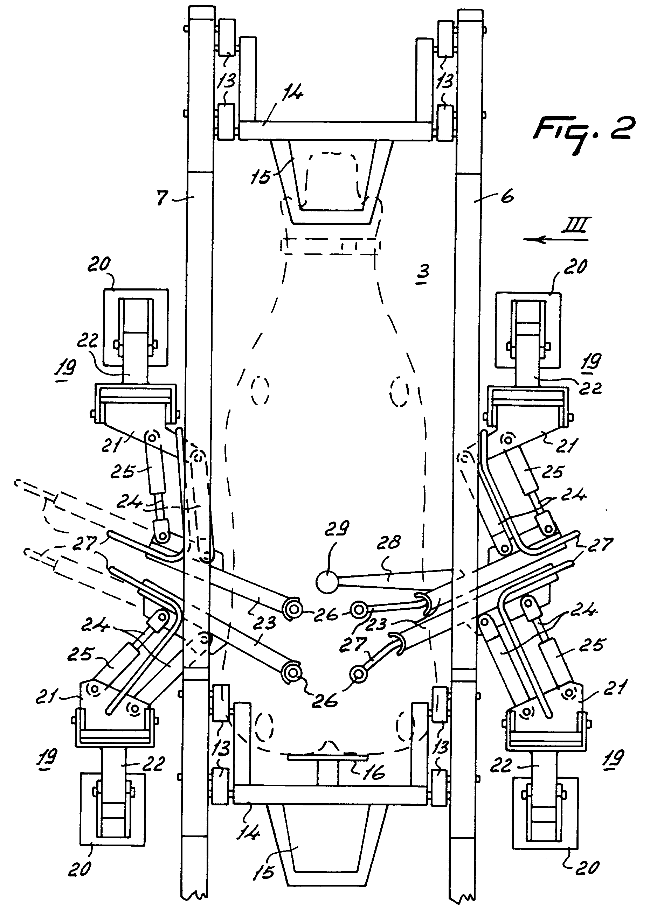

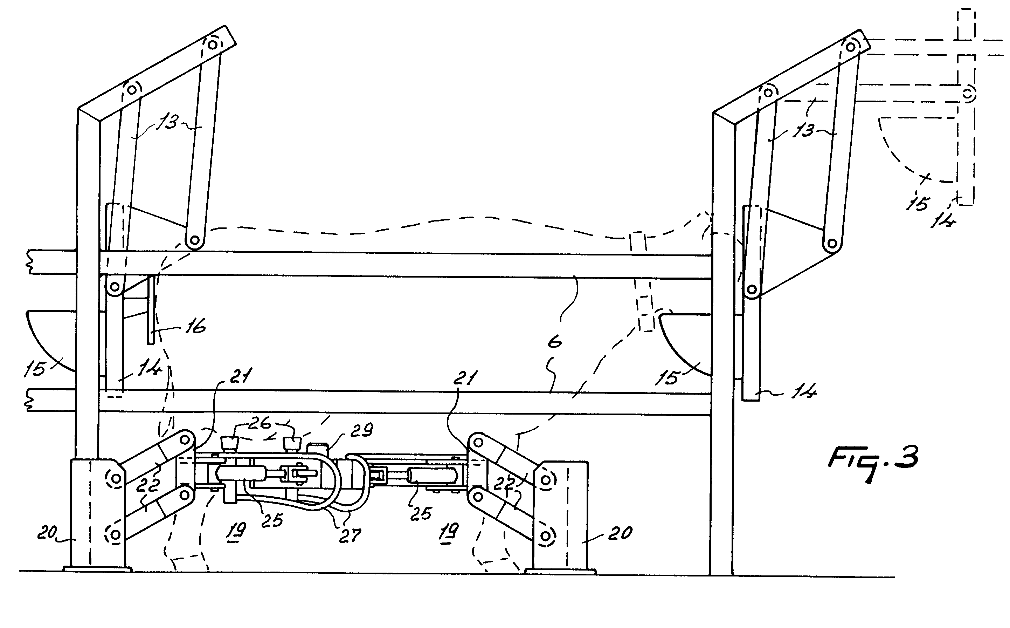

The construction shown in Figure 1 comprises three boxes 1, 2 and 3, which are aligned in the longitudinal direction, more specifically in such a manner that the animals can pass through these boxes in one direction only. The three boxes to be passed through by the animals are equipped, in this sequence, for cleaning the udder and more in particular the teats of the animals to be milked, massaging of the udder of the animals to be milked and milking the animals. For that purpose, cleaning means 4 are shown schematically in box 1, whilst means 5 for massaging an udder are shown schematically in box 2. The means contained in box 3 for milking, more particularly automatically milking animals, are shown in Figures 2 and 3.

Since the box which is to be passed through last, i.e. the milk box 3, is equipped with a relatively expensive construction for automatically milking animals, an optimum capacity utilization of the milk box 3 is important. Therefore, the period of time the animals remain in the boxes 1 and 2 should never exceed the period of time the animals are in the milk box 3 for being milked. This means that the time required for cleaning the animals and the time required for massaging the animals must at all times be shorter than the time required for milking.

The boxes 1, 2 and 3 are designed such that their longitudinal sides 6 and 7 form an integral whole. In a concrete embodiment, the longitudinal sides are formed by a continuous railing. The boxes 1, 2 and 3 which are connected up with each other in the lengthwise direction can be put into connection with each other by means of upwardly movable partitions 8 and 9. In addition, the box 1 is further provided with an entrance 10, while the milk box 3 is further provided with an exit 11. The entrance 10 of the box 1 through which an animal passes first and the exit 11 of the box 3 through which an animal passes last, are disposed at the short sides of the boxes 1 and 3, whilst both the entrance and the exit are constituted by an upwardly movable partition 12. So as to allow the animals to pass from one box to the other, it must be possible to hinge the partitions 8 and 9 upwardly in such a manner that the animals can pass therebelow from one box to the other. For that purpose, the upwardly movable partitions 8 and 9 are fitted with a four-bar linkage 13, with the aid of which a plate or frame 14 which constitutes the partition can be moved obliquely forwardly and upwardly. Preferably, the entrance 10 and exit 11, respectively, are designed in a similar manner as the partitions 8 and 9, that is to say that also the upwardly movable partitions 12 include a four-bar linkage construction 13 having a plate or frame 14, so that after the plate or frame 14 has been pivoted upwardly the entrance to the box 1 and the exit from the box 3, respectively, are released.

A feed trough 15 may be attached to each of the plates or frames 14 of the partitions 8, 9 and 12. When the plate or frame 14 is pivoted upwardly, the relevant feed trough does substantially not change its position, so that, should any fodder stay behind in the feed trough, these residues will not drop therefrom during the upward pivotal motion of the relevant partition. In addition, the plate or frame 14 of the partitions 12, 8 and 9 may be provided with means for moving the animal present in the relevant box to a more defined position, which is of importance with a view to applying the udder cleaning means in box 1 or applying the udder massaging means in box 2 or for the application of the teat cups for automatically milking the animal in box 3. So as to render it possible for animals, which entered the box 1 or the box 2 but to which thereafter access to the box 3 must be denied, to be lead in an easy manner from the boxes 1 and 2, the railing is provided at the longitudinal side 6 with respective exits 17 and 18.

After an animal has been cleaned in box 1 and has been subjected to massage in box 2 and thereafter has been guided to box 3, the animal proceeds that far in box 3 until its head arrives at the relevant feed trough 15. The partition 9 is then moved downwards until the relevant positioning means 16 contact the hind side of the animal, whereby the position of the animal in the longitudinal direction has predominantly been determined. By restricting the distance between the two railings forming the longitudinal sides 6 and 7, also the position in the transverse direction of the animal has predominantly been determined. In combination with the animal identification data, this also roughly determines the position of the teats of an animal's udder, so that a milking cluster can be passed to under the animal and, after the position of the teats has been accurately determined with the aid of a special sensor, the teat cups of the milking cluster can be connected and the animal can be milked automatically. During the time in which the animal is milked, a subsequent animal, which has already been cleaned at an earlier instant, can be allowed to enter the box 2 to be subjected there to a massage treatment. The animal will again advance that far into box 2 until its head arrives at the relevant feed trough 15, whereafter the partition 8 is moved downwards, more particularly until the relevant positioning means 16 contact the hind side of the animal. Thereafter the cow entering the box 1 can advance that far until also the head of this animal arrives at the feed trough 15 attached to said last partition 12, whereafter the entrance of box 1 closes until the positioning means 16, attached to the entrance of the milk box 1, are in contact with the hind side of the animal. As also in the boxes 1 and 2 the position of the udder relative to the boxes is predominantly determined by the positioning of the animal, the cleaning and massaging means can easily be moved in the proper manner to under the animal.

The milk box 3 is shown in greater detail in Figures 2 and 3. In these drawings, the construction for automatically milking animals is assembled from four robot arm constructions 19 which operate independently of each other. The four robot arm constructions 9 are disposed near the box walls, that is to say near the longitudinal sides 6 and 7 of the milk box 3, more specifically on the exterior side of the milk box 3. The robot arm constructions arranged further to the rear on either side of the milk box and the robot arm constructions disposed in a more advanced position on either side of the milk box are arranged such that they face each other in a two-by-two relationship. Each of the robot arm constructions 9 comprises a frame portion 20 which is mounted in a fixed position outside the milk box and a supporting element 21 which is movable in height with respect to the fixed frame portion 20 with the aid of a four-bar linkage 22. The supporting element 21 extends in a substantially horizontal plane and remains in this substantially horizontal position during the up and down motion by means of the four-bar linkage 22. In addition, the robot arm construction 19 includes a straight carrier 23 which is connected to a supporting element 21 with the aid of a four-bar linkage 24. The four-bar linkage 24 is then active in a predominantly horizontal plane. As one of the arms, i.e. the arm 25 of the four-bar linkage 24, is adjustable in length, the carrier 23 can move in two coordinates in a horizontal plane.

The up-and-down motion of the carrier 23 by means of the four-bar linkage 22, as well as the pivotal motion of the carrier 23 in a substantially horizontal plane by means of the four-bar linkage 24, are effected with the aid of pneumatic operating cylinders, which are not further shown in the drawings. Also the longitudinally adjustable arm 25 of the four-bar linkage 24 can be constituted by a pneumatic operating cylinder. In the rest condition, the position of the two four-bar linkages 22 and 24, as well as the length of the arm 25 are such that the carrier 23 is in a position substantially completely outside the milk box 3. In Figure 2 this position of the carrier 23 for two robot arm constructions 19 is shown by means of broken lines. In this position, the carrier 23 extends to the rear towards the milk box, which facilitates moving the carrier between a front leg and a hind leg of an animal in a direction to under the udder. Since the robot arm constructions 19 which are disposed near each of the longitudinal sides of the milk box face each other, the carriers 23 of these robot arm constructions 19 can extend in a somewhat parallel direction and the carriers can simultaneously be moved, without hitting each other, in such a manner that each end can be moved to under a relevant teat of an animal to be milked. At the end of each carrier 23 there is a teat cup 26, to which is connected a milk tube 27, which extends in the longitudinal direction of the carrier 23, either passing through the carrier 23, or parallel to the carrier 23, which milk tube 27 extends in the form of a loop at the other end of the carrier 23 and from there is passed along the four-bar linkage 24 to the supporting element 21 and further to the milk collecting unit in the milking plant. The teat cups 26 may be connected via this milk tube to the relevant carrier 23, although it is alternatively possible to provide an additional, flexible element to provide a connection between a teat cup 26 and a carrier 23. In the carrier 23, or parallel thereto, there can be present an operating cylinder which acts either on the milk tube 27 or on the said flexible element for pulling the teat cup 26 against a carrier 23 or keeping it right up against it. After a carrier 23, at whose end a teat cup 26 is disposed, has been moved to under a teat to which the teat cup 26 is to be connected, then, once the teat cup has been connected, the carrier 23 can be moved back, so that the teat cup 26 remains connected to the carrier 23 only via the milk tube 27 or via the said flexible connection. This has the advantage that, should the animal move slightly, the teat cup 26 can easily follow the motions of the animal because of its flexible coupling to the carrier 23. When the milking operation has ended and the vacuum in the teat cup 26 falls off, then by activating immediately thereafter or simultaneously therewith the operating cylinder which acts on the milk tube or on the flexible connection, the teat cup 26 can be retracted against the seat at the end of the carrier 23. Figure 2 illustrates the position of the carrier 23 of the two robot arm constructions located in the drawing outside the longitudinal side 7 in the position, in which the teat cups bearing on the carriers have been moved to under the teats of the animal to be connected in this position, whilst the carriers of the robot arm constructions at the outer side of the longitudinal side 6 are shown in a position, in which the teat cups 26 are in the connected state and the carriers 23 in the retracted state, so that a flexible connection of the teat cups to the robot arm constructions has been accomplished. At one of the carriers 23 there is shown a supporting element 28 for a sensor 29, more in particular a laser sensor, with the aid of which laser sensor an accurate determination of the position of the teats with respect to the robot arm constructions, and consequently with respect to the milk box, is possible. Such an accurate positional determination is highly desirable to enable a reliable connection of the teat cups to the teats.

Furthermore, the invention is not limited to the embodiment shown in the drawings, but also relates to all kinds of modifications, in so far as they are within the scope of the accompanying claims.

## Claims

1. A construction for automatically milking animals, such as cows, comprising a milk box (3) having a milking robot with at least one robot arm construction (19) with a carrier (23) of a teat cup (26) and a second four-bar linkage (22) with which the carrier (23) can be moved in the upward direction, characterized in that the carrier (23) is attached to a first four-bar linkage (24), of which one arm (25) is adjustable and which first four-bar linkage (24) is active in a predominantly horizontal plane.

2. A construction as claimed in claim 1, characterized in that the carrier (25) is attached to the first four-bar linkage (24) near the box wall.

3. A construction as claimed in any one of the preceding claims, characterized in that near the box wall it is provided with adjusting devices which comprise first and second four-bar linkages (22, 24) and are arranged such that the teat cups (26) are simultaneously couplable to the four teats of an animal to be milked.

4. A construction as claimed in claim 3, characterized in that near each of the two side walls of the milk box (3) there are disposed two facing first four-bar linkages (24).

5. A construction as claimed in claim 4, characterized in that the first four-bar linkages (24) located near one side wall of the milk box are attached to the exterior side, at the front and rear side of the milk box.

6. A construction as claimed in any one of the preceding claims, characterized in that the second four-bar linkage (22) is connected with the said first four-bar linkage (24) and is capably of upward motion to a frame portion (20) located near the box wall.

7. A construction as claimed in any one of the preceding claims, characterized in that the first and second four-bar linkages (22, 24) are movable with the aid of a pneumatic operating cylinder.

8. A construction as claimed in any one of the preceding claims, characterized in that the carrier (23) of a teat cup (26) extends predominantly linearly and is obliquely and rearwardly movable between a front and hind leg of an animal to be milked to under a relevant teat of the animal.

9. A construction as claimed in any one of the preceding claims, characterized in that it includes teat cups (26) to which milk tubes (27) are connected which are separately accommodated capably of sliding in or along predominantly linearly extending carriers (23) of the teat cups (26).

10. A construction as claimed in claim 9, characterized in that a teat cup (26) can be pulled up against the end of a carrier (33) with the aid of an operating cylinder.

11. A construction as claimed in claim 10, characterized in that the operating cylinder acts on the milk tube.

12. A construction as claimed in claim 10, characterized in that the operating cylinder acts on a separate flexible element, such as a cable, by means of which the teat cup (26) can be pulled up against the end of a carrier (23).

13. A construction as claimed in any one of the preceding claims, characterized in that one of the carriers (23) is provided with a detector (29), more specifically a laser detector, for determining the position of the teats of the animal to be milked.

## Patentansprüche

1. Vorrichtung zum automatischen Melken von Tieren, wie z. B. Kühen, mit einer Melkbox (3), die einen Melkroboter mit mindestens einer Roboterarm-Konstruktion (19) aufweist, welche mit einem Träger (23) eines Zitzenbechers (26) und einem zweiten Gelenkviereck (22) versehen ist, mittels dessen der Träger (23) aufwärts bewegbar ist,
dadurch gekennzeichnet, daß der Träger (23) an einem ersten Gelenkviereck (24) angebracht ist, dessen einer Arm (25) verstellbar ist, und das in einer überwiegend horizontalen Ebene wirksam ist.

2. Vorrichtung nach Anspruch 1,
dadurch gekennzeichnet, daß der Tragarm (25) an dem ersten Gelenkviereck (24) nahe der Melkboxwand angebracht ist.

3. Vorrichtung nach einem der vorhergehenden Ansprüche,
gekennzeichnet durch nahe der Melkboxwand angeordnete Stellvorrichtungen, die durch erste und zweite Gelenkvierecke (24, 22) gebildet und derart angeordnet sind, daß die Zitzenbecher (26) gleichzeitig an die vier Zitzen eines zu melkenden Tieres anschließbar sind.

4. Vorrichtung nach Anspruch 3,
dadurch gekennzeichnet, daß nahe jeder der beiden Seitenwände der Melkbox (3) zwei einander zugewandte erste Gelenkvierecke (24) angeordnet sind.

5. Vorrichtung nach Anspruch 4,
dadurch gekennzeichnet, daß die nahe einer Seitenwand der Melkbox angeordneten ersten Gelenkvierecke (24) an der Außenseite der Vorder- und Rückseite der Melkbox angebracht sind.

6. Vorrichtung nach einem der vorhergehenden Ansprüche,
dadurch gekennzeichnet, daß das zweite Gelenkviereck (22) mit dem ersten Gelenkviereck (24) verbunden und relativ zu einem nahe der Melkboxwand angeordneten Rahmenteil (20) aufwärts zu bewegen ist.

7. Vorrichtung nach einem der vorhergehenden Ansprüche,
dadurch gekennzeichnet, daß die ersten und die zweiten Gelenkvierecke (24, 22) mittels eines pneumatischen Arbeitszylinders zu bewegen sind.

8. Vorrichtung nach einem der vorhergehenden Ansprüche,
dadurch gekennzeichnet, daß sich der Träger (23) eines Zitzenbechers (26) überwiegend linear erstreckt und zwischen einem Vorderbein und einem Hinterbein eines zu melkenden Tieres schräg nach hinten unter eine zugehörige Zitze des Tieres zu bewegen ist.

9. Vorrichtung nach einem der vorhergehenden Ansprüche,
gekennzeichnet durch Zitzenbecher (26), an die Milchleitungen (27) angeschlossen sind, die separat angeordnet und innerhalb oder längs überwiegend linear ausgerichteter Träger (23) der Zitzenbecher (26) verschiebbar sind.

10. Vorrichtung nach Anspruch 9,
dadurch gekennzeichnet, daß ein Zitzenbecher (26) mittels eines Arbeitszylinders gegen das Ende eines Trägers (23) zu ziehen ist.

11. Vorrichtung nach Anspruch 10,
dadurch gekennzeichnet, daß der Arbeitszylinder auf die Milchleitung wirkt.

12. Vorrichtung nach Anspruch 10,
dadurch gekennzeichnet, daß der Arbeitszylinder auf ein separates flexibles Element, wie z. B. ein Drahtseil, wirkt, mit dem der Zitzenbecher (26) gegen das Ende eines Trägers (23) zu ziehen ist.

13. Vorrichtung nach einem der vorhergehenden Ansprüche,
dadurch gekennzeichnet, daß einer der Träger (23) einen Detektor (29) aufweist, insbesondere einen Laserdetektor, um die Lage der Zitzen des zu melkenden Tieres zu bestimmen.

## Revendications

1. Dispositif de traite automatique d'animaux, tels que des vaches, comprenant un box de traite (3) ayant un robot trayeur avec au moins une structure (19) de bras de robot avec un élément porteur (23) d'un godet de trayon (26) et un deuxième système articulé (22) à quatre barres avec lequel l'élément porteur (23) peut être entrainé en sens ascendant,
**caractérisé** en ce que l'élément porteur (23) est attaché à un premier système articulé (24) à quatre barres dont un bras (25) est réglable et lequel premier système articulé (24) à quatre barres est actif dans un planessentiellement horizontal.

2. Dispositif selon la revendication 1, caractérisé en ce que l'élément porteur (23) est attaché au premier système articulé (24) à quatre barres, près de la paroi du box.

3. Dispositif selon la revendication 1 ou 2, caractérisé en ce qu'il est muni, près de la paroi du box, de dispositifs de réglage qui comprennent un premier et un deuxième systèmes articulés (22, 24) à quatre barres disposés de telle sorte que les godets dé trayons (26) peuvent être couplés simultanément aux quatre trayons d'un animal à traire.

4. Dispositif selon la revendication 3, caractérisé en ce que près de chacune des deux parois latérales du box de traite (3) sont disposés face-à-face deux premiers systèmes articulés (24) à quatre barres.

5. Dispositif selon la revendication 4, caractérisé en ce que les premiers systèmes articulés (24) à quatre barres situés près d'une paroi latérale du box de traite sont attachés au côté extérieur, sur les côtés antérieur et postérieur du box de traite.

6. Dispositif selon l'une quelconque des revendications précédentes, caractérisé en ce que le deuxième système articulé (22) à quatre barres est relié audit premier système articulé (24) à quatre barres et peut exécuter un mouvement ascendant par rapport à une partie (20) du bâti située près de la paroi du box.

7. Dispositif selon l'une quelconque des revendications précédentes, caractérisé en ce que le premier et le deuxième systèmes articulés (22, 24) sont mobiles à l'aide d'un vérin actionneur pneumatique.

8. Dispositif selon l'une quelconque des revendications précédentes, caractérisé en ce que l'élément porteur (23) d'un godet de trayon (26) s'étend essentiellement de manière rectiligne et est mobile obliquement et vers l'arrière entre une patte antérieure et une patte postérieure d'un animal à traire, jusque sous un trayon correspondant de l'animal.

9. Dispositif selon l'une quelconque des revendications précédentes, caractérisé en ce qu'il comprend des godets de trayons (26) auxquels sont reliés des tuyaux à lait (27) logés séparément, en pouvant coulisser, dans les éléments porteurs (23) des godets de trayons (26) ou bien le long de ces éléments porteurs (23) qui s'étendent essentiellement de manière rectiligne.

10. Dispositif selon la revendication 9, caractérisé en ce qu'un godet de trayon (26) peut être tiré contre l'extrémité d'un élément porteur (23) à l'aide d'un vérin actionneur.

11. Dispositif selon la revendication 10, caractérisé en ce que le vérin actionneur agit sur le tuyau à lait.

12. Dispositif selon la revendication 10, caractérisé en ce que le vérin actionneur agit sur un élément flexible séparé, tel qu'un câble, au moyen duquel le godet de trayon (26) peut être tiré contre l'extrémité d'un élément porteur (23).

13. Dispositif selon l'une quelconque des revendications précédentes, caractérisé en ce qu'un des éléments porteurs (23) est muni d'un détecteur (29), plus spécifiquement d'un détecteur à laser, pour déterminer la position des trayons de l'animal à traire.
